# EUROPEAN PATENT SPECIFICATION

(11) **EP 3 757 190 B1**
(45) Date of publication and mention of the grant of the patent: **13.10.2021**
(21) Application number: 19182506.6
(22) Date of filing: 26.06.2019
(51) Int. Cl.: C09K 5/10, H01M 8/04

(54) **LIQUID HEAT TRANSFER MIXTURE AND USE THEREOF**
FLÜSSIGES WÄRMEÜBERTRAGUNGSGEMISCH UND DESSEN VERWENDUNG
MÉLANGE DE TRANSFERT THERMIQUE DE LIQUIDE ET SON UTILISATION

(43) Date of publication of application: 30.12.2020
(73) Proprietor: Alpraaz AB, 262 74 Ängelholm (SE)
(72) Inventor: von KOENIGSEGG, Christian, 260 83 VEJBYSTRAND (SE)
(74) Representative: Brann AB

(56) References cited:
- US-A1- 2013 168 049
- TUMA P E ET AL: "NEW "GREEN" HEAT TRANSFER FLUIDS", SOLID STATE TECHNOLOGY, PENNWELL CORPORATION, TULSA, OK, US, vol. 43, no. 6, 1 June 2000 (2000-06-01), XP000949558, ISSN: 0038-111X
- "3M Novec 7500 Engineered Fluid", , 1 September 2009 (2009-09-01), pages 1-8, XP055006988, USA Retrieved from the Internet: URL:http://multimedia.3m.com/mws/mediawebs erver?mwsId=SSSSSu7zK1fslxtUO8_ZP8fSev7qe1 7zHvTSevTSeSSSSSS--&fn=prodinfo_nvc7500.pd f [retrieved on 2011-09-13]
- FRÖBA A P ET AL: "Thermophysical Properties of a Refrigerant Mixture of R365mfc (1,1,1,3,3-Pentafluorobutane) and Galden HT 55 (Perfluoropolyether)", INTERNATIONAL JOURNAL OF THERMOPHYSICS ; JOURNAL OF THERMOPHYSICAL PROPERTIES AND THERMOPHYSICS AND ITS APPLICATIONS, KLUWER ACADEMIC PUBLISHERS-CONSULTANTS BUREAU, NE, vol. 28, no. 2, 31 May 2007 (2007-05-31), pages 449-480, XP019501817, ISSN: 1572-9567, DOI: 10.1007/S10765-007-0178-Y

## Description

### Technical field

The technology proposed herein relates generally to the field of heat transfer liquids such as coolants for batteries and other electrical components and use of heat transfer liquids such as coolants for cooling or temperature control of batteries and other electrical components. More particularly the technology proposed herein concerns a liquid heat transfer mixture comprising a mixture of a liquid perfluoropolyether and a liquid alkoxy-perfluoroalkane and the use of the liquid heat transfer mixture for cooling or heating batteries and other electrical components, such as in an electric vehicle.

### Background

Batteries for powering electric vehicles, such as electrical cars, generally, for reasons of efficiency and longevity, require temperature control during use. This inter alia includes cooling the batteries during charging, prior to use, and during discharging as the electric vehicle is used, as well as heating the batteries in colder climates to a suitable temperature prior to charging or discharging/using the batteries.

While temperature control of batteries provides increased efficiency and cooling, other factors of the operating environment influence the use of batteries for powering electric vehicles. These factors include the physical forces on the batteries due to accelerations and decelerations, both along and transverse to the horizontal direction of travel of the vehicle as a result of the driving of the vehicle, but also in the vertical direction due to for example unevenness in a road surface on which an electric vehicle travels. Damage to the battery from physical forces, including physical forces caused by for example collisions, may cause malfunctions of the batteries such as loss of power, due to broken connections within or between batteries, or even short circuiting of the batteries which may lead to heat generation and eventually a fire in the batteries.

Batteries for electric vehicles may be cooled by air, (passively or forced by a fan), by providing a dielectric oil within the battery and subsequently cooling the dielectric oil, or by passing a coolant fluid through a conduit arranged in the battery along the battery cells.

Cooling with a liquid coolant (dielectric oil within the battery or a coolant in a conduit in the battery) provide higher cooling efficiency that air cooling, yet may have other drawbacks. Dielectric oils may for instance have low heat capacities and thus provide only limited cooling, whereas liquid coolants in conduits, which liquid coolants may typically comprise mixtures of water and glycol, necessitates a separate conduit in order to separate the coolant from the conducting parts of the battery and the battery cells, the separate conduit decreasing the heat flow from the batteries to the coolant fluid and thus decreasing the cooling efficiency.

Additionally other electrical components may benefit from cooling or temperature control. These components generally include for example transformers and processors, and other electrical components which heat up when used. In an electric vehicle these components may include power electronics such as inverters, DCDC converters, chargers, motor controllers, as well as the abovementioned battery and the electric motor or motors that power the car.

Tuma P. E. & Tousignant L.: New "green" heat transfer fluids, Solid State Technology, Pennwell Corporation, Tulsa, OK, US, vol. 43, no. 6, 1 June 2000, discloses a segregated hydrofluoroether heat transfer fluid in which a perfluorocarbon segment of the molecule is separated from a fully hydrogenated segment by the ether oxygen. US 2013/168049 discloses a process of transferring heat using a heat transfer fluid comprising one or more linear perfluoropolyethers.

Accordingly there remains a need for further heat transfer liquids and uses of heat transfer liquids to more efficiently cool batteries and other electrical components, such as in electric vehicles.

### Object of the Technology

Accordingly it is an object of the technology proposed herein to provide a more efficient liquid heat transfer mixture and use of the liquid heat transfer mixture for cooling batteries and other electrical components, such as in electric vehicles.

### Summary

At least one of the abovementioned objects, or at least one of the further objects which will become evident from the below description, are according to a first aspect of the technology proposed herein obtained by a liquid heat transfer mixture comprising a mixture of a liquid perfluoropolyether and a liquid alkoxy-perfluoroalkane, wherein the volume ratio of the liquid perfluoropolyether to the liquid alkoxy-perfluoroalkane is from 20:80 to 80:20.

Accordingly the technology proposed herein is based on the discovery that a mixture of a liquid perfluoropolyether and a liquid alkoxy-perfluoroalkane possesses properties that are very suitably for cooling or heating batteries and other electrical components, in particular for cooling or heating batteries powering electric vehicles. Thus whereas perfluoropolyether liquids generally have a high viscosity and low heat capacity, and whereas alkoxy-perfluoroalkane liquids generally have lesser electrical insulation properties and low boiling points and also are hygroscopic, the mixture of a liquid perfluoropolyether and a liquid alkoxy-perfluoroalkane provides a liquid heat transfer mixture with good electrical insulation properties, low evaporation, a high boiling point and an increased heat capacity.

At least one of the abovementioned objects, or at least one of the further objects which will become evident from the below description, are according to corresponding second and third aspects of the technology proposed herein achieved by the use of the liquid heat transfer mixture according to the first aspect of the technology proposed herein for cooling or heating an electrical component, preferably for cooling or heating an electrical component in an electric vehicle, more preferably for heating or cooling a battery powering an electric vehicles such as an electric car, and
a method of cooling or heating an electrical component, preferably for cooling or heating an electrical component in an electric vehicle, more preferably for heating or cooling a battery powering an electric vehicles such as an electric using the liquid heat transfer mixture according to the first aspect of the technology proposed herein.

### Detailed description

A more complete understanding of the abovementioned and other features and advantages of the technology proposed herein will be apparent from the following detailed description.

The first aspect of the technology proposed herein concerns a liquid heat transfer mixture comprising a mixture of a liquid perfluoropolyether and a liquid alkoxy-perfluoroalkane, wherein the volume ratio of the liquid perfluoropolyether to the liquid alkoxy-perfluoroalkane is from 20:80 to 80:20.

Perfluoropolyethers are known to generally have good electrical insulation properties, to be non-hygroscopic and to have high boiling points. These are properties which make them suitable for use where longevity is desired. However, their high weight and high viscosity make them difficult to handle in a vehicle setting, and their low heat capacity make them less suitable as heat transfer liquids, including for cooling or heating the batteries powering electric vehicles and other electrical components.

On the other hand alkoxy-perfluoroalkanes generally have heat capacities suitable for cooling purposes. They are however generally hygroscopic and have low boiling points, which yields poor longevity to evaporation of the alkoxy-perfluoroalkane and the alkoxy-perfluoroalkane being hygroscopic. They also have lesser electrical insulation properties which render them less suitable as heat transfer liquids for cooling batteries and other electrical components such as batteries powering electric vehicles.

However, as identified by the present inventor, a mixture of a perfluoropolyether and an alkoxy-perfluoroalkane can yield very suitable properties for cooling or heating batteries powering electric vehicles as well as other electrical components. As further described in the example such a mixture may provide about 1000 times the electrical insulation capability of the alkoxy-perfluoroalkane alone, an evaporation rate and a tendency to take up water that is about halved compared to the alkoxy-perfluoroalkane alone, and a relatively high boiling point. The mixture may further provide a cooling capacity that is about 30% better than that of the perfluoropolyether alone, while being lighter than the perfluoropolyether alone.

This mixture further appears to have a useable life, in an electric vehicle setting for cooling or heating the batteries powering the electric vehicle as well as other electrical components in the electric vehicle, of two to three years, which is a time interval that is acceptable compared to the useable life of an alkoxy-perfluoroalkane alone in an electric vehicle setting which may be as low as three months primarily due to water uptake.

The liquid perfluoropolyether and the liquid alkoxy-perfluoroalkane are further miscible to form a clear liquid which does not stratify or separate, even after several weeks. In an electric vehicle the liquid mixture will further be continuously mixed by the varying acceleration forces as the vehicle travels, thus ensuring that the liquid mixture does not separate.

The liquid heat transfer mixture preferably has a melting point of less than 0°C, preferably less than 30°C. This is advantageous in that it provides for using the liquid heat transfer mixture also in environments where the temperature may be expected to go below 0°C.

The liquid heat transfer mixture can be used both for removing heat from an electrical component such as a battery, i.e. for cooling the battery, and for supplying heat to the electrical component, i.e. for heating the battery.

Typically the liquid heat transfer mixture will be used for removing heat from the battery or other electrical component. Accordingly the term liquid heat transfer mixture also encompasses the term liquid cooling mixture.

The liquid heat transfer mixture is preferably a liquid battery coolant mixture, i.e. a liquid mixture suitable for cooling a battery.

The mixture may comprise further components, such as for example a dye to simplify identification of leakage of the mixture, one or more indicator components for indicating, by color change, whether the temperature of the mixture has surpassed a set threshold or to indicate the moisture content of the mixture.

The liquid perfluoropolyether comprises a perfluorinated polyether.

The liquid alkoxy-perfluoroalkane comprises an alkyl bound via an oxygen atom to an alkane in which at least two hydrogen atoms have been substituted with fluorine atoms. Typically the alkyl comprises from 1 to 5 carbon atoms, such as from 1 to 3 carbon atoms. The alkyl is preferably straight but may be branched. The alkyl may further be substituted with fluorine. The alkane may comprise 2 to 9 carbon atoms, such as preferably 3 to 7 carbon atoms or 3 to 5 carbon atoms. The alkane is preferably straight but may be branched or cyclic. One of the carbon atoms in the alkane may be substituted by an oxygen atom. The overall number of fluorine atoms to carbon atoms in the alkane is preferably at least 2:1. The alkane may be further substituted by a fluoroalkane, such as a fluorinated methyl or fluorinated ethyl substituent.

The liquid alkoxy-perfluoroalkane and the liquid perfluoropolyether preferably each have a melting point of less than 0°C, preferably less than 30°C. This is advantageous in that it provides for using the liquid heat transfer mixture also in environments where the temperature may be expected to go below 0°C.

In order to obtain the advantages of the technology proposed herein the volume ratio should be 20:80 to 80:20.

The perfluoropolyether preferably has a boiling point which is at least 55°C, preferably at least 70°C, more preferably at least 100°C, and which boiling point is higher than the boiling point of the liquid alkoxy-perfluoroalkane. This is advantageous as it increases the boiling point of the liquid heat transfer mixture. Preferably the difference in boiling point between the liquid perfluoropolyether and the liquid alkoxy-perfluoroalkane is at least 20°C such as at least 40°C, preferably at least 60°C such as at least 80°C, more preferably at least 100°C.

Preferably the liquid perfluoropolyether has the general chemical formula of CF₃-O-(CF₂(CF₃)-CF-O)ₙ-(CF₂-O)ₘ-CF₃, and preferably an average molecular weight of at least 340 g/mole, preferably at least, more preferably at least 580 g/mole such as at least 610, 760, 870 or 1020 g/mole. In the formula n and m are integers. An average molecular weight of 530 g/mole corresponds to a boiling point of about 100 °C. The liquid perfluoropolyether may thus be a perfluoropolyether available under the trademark Galden from Solvay. Table 1 lists data for suitable Galden liquids.

**Table 1. List of suitable Galden liquids.**

| Trade name | Average molecular weight g/mole | Boiling point °C | Thermal conductivity W/m-C | Specific heat J/kg-K | Volume resistivity Ohm-cm |
|---|---|---|---|---|---|
| Galden D02TS, D03, D02, D05 | 750, 870, 760, 1020 | 162,203, 175,230 | 0.07 | 973 | 5*10¹⁵ |
| Galden LS200, LS2015, LS230, HS240, HS260 | 870, 950, 1020, 1085,1210 | 200,215, 230, 240, 260 | 0.07 | 973 | 5*10¹⁵ |
| Galden HT55, HT70, HT80, HT110, | 340,410, 430, 580 | 55, 70, 80, 110 | 0.065 | 963 | 5*10¹⁵ |
| Galden HT135, HT170, HT200, HT230, HT270 | 610, 760, 870, 1020, 1550 | 135, 170, 200, 230, 270 | 0.065 | 963 | 5*10¹⁵ |

As can be seen from the table these liquids have high volume resistivity, thus providing good electrical insulation, however the specific heat is only about 23% of that of water and the cooling properties of these liquids, if used alone, are therefore limited.

Preferably the liquid alkoxy-perfluoroalkane is selected from the group consisting of Methoxy-heptafluoropropane, Methoxy-nonafluorobutane, Ethoxy-nonafluorobutane, 3-Methoxyperfluoro(2-methylpentane), 2-(trifluoromethyl)-3-ethoxydodecafluorohexane, 1,1,1,2,3,3-Hexafluoro-4-(1,1,2,3,3,3-hexafluoropropoxy)-Pentane, and 2,3,3,4,4-pentafluoro-5-methoxy-2,5-bis[1,2,2,2-tetrafluoro-1-(trifluoromethyl)ethyl]tetrahydrofuran. Such liquids, and thus the liquid alkoxy-perfluoroalkane, may be a liquid alkoxy-perfluoroalkane available under the trademark Novec from 3M, as exemplified in table 2 below.

**Table 2: List of suitable Novec liquids**

| Trade name | Chemical name | Boiling point °C | Thermal conductivity W/m-K | Specific heat J/kg-K | Volume resistivity Ohm-cm |
|---|---|---|---|---|---|
| Novec 7000 | Methoxy-heptafluoropropane | 34 | 0.075 | 1300 | 10⁸ |
| Novec 7100 | Methoxy-nonafl uorobutan e | 61 | 0.069 | 1183 | 10⁸ |
| Novec 7200 | Ethoxy-nonafluorobutane | 76 | 0.068 | 1220 | 10⁸ |
| Novec 7300 | 3-Methoxyperfluoro(2-methylpentane) | 98 | 0.063 | 1140 | 10¹¹ |
| Novec 7500 | 2-(trifluoromethyl)-3-ethoxydodecafluorohexane | 128 | 0.065 | 1128 | 10⁸ |
| Novec 7600 | 1,1,1,2,3,3-Hexafluoro-4-(1,1,2,3,3,3-hexafluoropropoxy)-Pentane | 131 | 0.071 | 1319 | 10¹⁰ |
| Novec 7700 | 2,3,3,4,4-pentafluoro-5-methoxy-2,5-bis[1,2,2,2-tetrafluoro-1-(trifluoromethyl)ethyl]tetrahydrofuran | 167 | 0.064 | 1040 | 10¹¹ |

Compared to table 1 these liquids have significantly higher heat capacities but 1E4 to 1E7 lower volume resistivity than the Galden liquids in table 1. Preferable the liquid alkoxy-perfluoroalkane has a specific heat of at least 1040, preferably at least 1140 or at least 1183, more preferably at least 1220 such as at least 1300 J/kg-K.

The liquid alkoxy-perfluoroalkane may have a specific heat which is at least 140 J/kg-K larger, and preferably not more than 356 J/kg-K larger, than the specific heat of the perfluoropolyether.

The liquid alkoxy-perfluoroalkane preferably comprises a methoxy or ethoxy group bound to a perfluorinated propane, butane, pentane or heptane. More preferably the liquid alkoxy-perfluoroalkane is selected from the group consisting of Methoxy-heptafluoropropane, Methoxy-nonafluorobutane, Ethoxy-nonafluorobutane, 3-Methoxyperfluoro(2-methylpentane) and 2-(trifluoromethyl)-3-ethoxydodecafluorohexane.

Although the liquid battery cooling mixture may comprise additional components, it preferably consists of a mixture of the liquid perfluoropolyether and the liquid alkoxy-perfluoroalkane.

The volume ratio of the liquid perfluoropolyether to the liquid alkoxy-perfluoroalkane may be varied based on the intended use. If heat transfer properties, such as cooling properties, are to be prioritized over longevity, then the volume ratio of the alkoxy-perfluoroalkane can be increased relative to the perfluoropolyether. This is advantageous for cooling a battery powering an electric vehicle on a racing track or other situation where high amounts of power are discharged from the battery whereby significant cooling of the battery is needed. This also applies to cooling of the other electrical components in the electrical vehicle (i.e. motor, power electronics, converters, etc.) which are similarly affected by the high amount of power discharged from the battery and supplied to the motor or motors. This further applies to other electrical components outside of electric vehicles in cases where heat transfer properties need to be prioritized over longevity.

Alternatively the volume ratio of the perfluoropolyether can be increased relative to the alkoxy-perfluoroalkane to increase longevity for heat transfer, such as cooling, of batteries and and/or electrical components subjected to lighter use with lower amounts of power being discharged from the batteries and/or passing through the electrical components, such as for example in electrical vehicles subjected to lighter use.

Accordingly the volume ratio of the liquid perfluoropolyether to the liquid alkoxy-perfluoroalkane in the mixture may be from 20:80 to 40:60 for longevity, or alternatively from 80:20 to 60:40 for improved heat transfer capacity. The volume ratio may also be from 30:70 to 70:30, such as from 40:60 to 60:40, preferably from 45:55 to 55:45, most preferably 50:50.

The second and third aspects of the technology proposed herein achieved relates to
the use of the liquid heat transfer mixture according to the first aspect of the technology proposed herein for cooling or heating an electrical component, preferably for cooling or heating an electrical component in an electric vehicle, more preferably for heating or cooling a battery powering an electric vehicles such as an electric car, and
a method of cooling or heating an electrical component, preferably for cooling or heating an electrical component in an electric vehicle, more preferably for heating or cooling a battery powering an electric vehicles such as an electric using the liquid heat transfer mixture according to the first aspect of the technology proposed herein.

After the liquid heat transfer mixture has been used to cool or heat the electrical component it may be cooled (to remove heat) or heated (to resupply heat energy deposited in the electrical component) and be recirculated to the electrical component.

The electrical component may be any electrical component such as a for example batteries, transformers and processors, and other electrical components which heat up when used or which may need to be heated or otherwise temperature controlled.

An electrical component in an electric vehicle comprises the battery powering the electric vehicle as well as other electrical components such as power electronics including inverters, DCDC converters, chargers and motor controllers, as well as the electric motor or motors that power the car.

The battery is preferably a battery storing electrical energy in the form of chemical energy (such a lithium ion battery), but may also encompass other electrical components capable of storing energy such as capacitors and electrical flywheels.

The electric vehicle is preferably an electrical car, such as an electric sports car. The electrical car may be a hybrid car having both an internal combustion motor and an electrical motor for propelling the car, or may alternatively be an electrical car having no other motor for propelling the car than the electric motor. The electric vehicle may for example alternatively be an electrically propelled boat or electrically propelled airplane.

The electric vehicle generally comprises an electrical motor for propelling the vehicle, either directly or via gearing, and batteries powering the electric vehicle, i.e. by providing electrical energy to the electrical motor propelling the vehicle.

Preferably the use comprises bringing the liquid heat transfer mixture into contact with the electrical component, preferably by bringing the liquid heat transfer mixture into contact with electrically conducting parts of the electrical component. This is advantageous in that it allows more efficient heat transfer, by allowing the liquid heat transfer mixture to directly contact and cool the electrical component, and preferably by directly contacting the electrically conducting parts, i.e. those parts that carry electrical power, i.e. current and/or charge, and therefore are the primary source of heat in the electrical component, for the most efficient heat transfer. This is possible because the liquid heat transfer mixture is substantially nonconductive and therefore do not interfere with the working of the electrical component.

Accordingly the use may comprise cooling or heating a battery powering an electric vehicle such as a car, wherein the battery comprises a plurality of battery cells and the liquid heat transfer mixture is brought into contact with the terminals of at least a majority (such as all) of the battery cells. This is advantageous because the liquid heat transfer mixture is substantially nonconductive and therefore can be applied directly to the battery terminals, thus leading to more efficient cooling of the surfaces, i.e. the terminals and connected electrodes, where the chemical reaction providing the electrical energy takes place, as opposed to cooling only the outer surface of the battery cells which is less effective in that heat must dissipate the full distance from the electrodes to the surface layer of the battery cell if it is to be removed by the liquid heat transfer mixture. The battery cells may for example be positioned in an outer liquid tight enclosure having an inlet and outlet for passing the liquid heat transfer mixture through the enclosure and past the battery cells and their terminals. Additionally or alternatively the outer enclosures of the battery cells may also be contacted by the liquid heat transfer mixture.

Alternatively the battery may comprise a plurality of battery cells and the liquid heat transfer mixture be led inside a conduit whose outer surface is in thermal contact with an outer surface of at least a majority of the battery cells.

Preferably the electric vehicle is an electrically powered car or a hybrid car having an internal combustion engine and an electrical engine both arranged, directly or indirectly, for powering the car, and preferably the car has a total engine power for powering the car of at least 500 kW.

### Example: A liquid heat transfer mixture

A 50/50 (volume/volume) mixture of the liquid perfluoropolyether available under the trademark Galden HT135 (see table 1) and the liquid alkoxy-perfluoroalkane available under the trademark Novec 7200 (see table 2), was prepared by mixing the liquids together gently in a container. The liquids blended together to form a clear liquid and measurements were taken and compared to similar amounts of the respective liquid perfluoropolyether and liquid alkoxy-perfluoroalkane alone stored in containers under the same conditions.

The electrical insulation properties of the mixture and the respective liquid perfluoropolyether and alkoxy-perfluoroalkane liquid alone were measured using a conductometer and compared. It was found that the liquid mixture had an electrical insulation capacity about 1000 times larger for the mixture compared to the alkoxy-perfluoroalkane alone.

The density of the respective mixture and liquids alone were also determined based on the volume and weight of the liquids. It was found that the liquid mixture had a density that was less than the density of the perfluoropolyether. After three weeks the weight and volume measurements were repeated and it was found that the evaporation, and the tendency to take up water, for the mixture was about half that of the alkoxy-perfluoroalkane alone. A sample from each container was heated and it was found that the boiling point of the liquid mixture was clearly above that of the alkoxy-perfluoroalkane alone. During the heating it was noted that the heat capacity of the liquid mixture was about 30% better than that of the perfluoropolyether alone.

The mixture was kept for several additional weeks during which the liquid mixture did note stratify or separate. Based on the rates of evaporation and water uptake it was estimated that the liquid mixture would have a useful life, as a liquid coolant for battery powered vehicles of two to three years.

In summary of the example the mixture retained most of the cooling capacities of the liquid alkoxy-perfluoroalkane while obtaining an increased electrical insulation and higher boiling point than those displayed by the liquid alkoxy-perfluoroalkane alone.

Additional mixtures were made with other proportions of the perfluoropolyether and the alkoxy-perfluoroalkane and the abovementioned measurements were repeated. It was found that an 80:20 mixture having an increased (i.e. 80 vol%) amount of perfluoropolyether had a further improved electrical insulation capacity and decreased evaporation and tendency to take up water, and an increased boiling point, while heat capacity was decreased.

Conversely, it was found that an 20:80 mixture having an increased (i.e. 80 vol%) amount of alkoxy-perfluoroalkane further improved heat capacity while lowering the electrical insulation capacity and the boiling point, and having an increased evaporation and tendency to take up water.

### Feasible modifications

The technology proposed herein is not limited only to the embodiments described above and shown in the drawings, which primarily have an illustrative and exemplifying purpose. This patent application is intended to cover all adjustments and variants of the preferred embodiments described herein, thus the present invention is defined by the wording of the appended claims. Thus, the heat transfer mixture, use and method may be modified in all kinds of ways within the scope of the appended claims.

## Claims

1. A liquid heat transfer mixture comprising a mixture of a liquid perfluoropolyether and a liquid alkoxy-perfluoroalkane, wherein the volume ratio of the liquid perfluoropolyether to the liquid alkoxy-perfluoroalkane is from 20:80 to 80:20.

2. The liquid heat transfer mixture according to claim 1, wherein the perfluoropolyether has a boiling point which is at least 55°C, preferably at least 70°C, more preferably at least 100°C, and which boiling point is higher than the boiling point of the liquid alkoxy-perfluoroalkane.

3. The liquid heat transfer mixture according to any of the preceding claims 1, wherein the liquid perfluoropolyether has the general chemical formula of CF₃-O-(CF₂(CF₃)-CF-O)ₙ-(CF₂-O)ₘ-CF₃, and preferably an average molecular weight of at least 340 g/mole, preferably at least 530 g/mole, more preferably at least 580 g/mole such as at least 610, 760, 870 or 1020 g/mole.

4. The liquid heat transfer mixture according to any of the preceding claims, wherein the liquid perfluoropolyether is a perfluoropolyether available under the trademark Galden.

5. The liquid heat transfer mixture according to any of the preceding claims, wherein the liquid alkoxy-perfluoroalkane comprises a methoxy or ethoxy group bound to a perfluorinated propane, butane, pentane or heptane.

6. The liquid heat transfer mixture according to any of the preceding claims, wherein the liquid alkoxy-perfluoroalkane is selected from the group consisting of Methoxy-heptafluoropropane, Methoxy-nonafluorobutane, Ethoxy-nonafluorobutane 3-Methoxyperfluoro(2-methylpentane), 2-(trifluoromethyl)-3-ethoxydodecafluorohexane, 1,1,1,2,3,3-Hexafluoro-4-(1,1,2,3,3,3-hexafluoropropoxy)-Pentane, and 2,3,3,4,4-pentafluoro-5-methoxy-2,5-bis[1,2,2,2-tetrafluoro-1-(trifluoromethyl)ethyl]tetrahydrofuran.

7. The liquid heat transfer mixture according to any of the preceding claims, wherein the liquid alkoxy-perfluoroalkane has a specific heat of at least 1040, preferably at least 1140 or at least 1183, more preferably at least 1220 such as at least 1300 J/kg-K.

8. The liquid heat transfer mixture according to any of the preceding claims, wherein the liquid alkoxy-perfluoroalkane has a specific heat which is at least 140 J/kg-K larger, and preferably not more than 356 J/kg-K larger, than the specific heat of the perfluoropolyether.

9. The liquid heat transfer mixture according to any of the preceding claims, wherein the liquid alkoxy-perfluoroalkane is a liquid alkoxy-perfluoroalkane available under the trademark Novec.

10. The liquid heat transfer mixture according to any of the preceding claims, wherein the liquid battery coolant mixture consists of a mixture of the liquid perfluoropolyether and the liquid alkoxy-perfluoroalkane.

11. The liquid heat transfer mixture according to any of the preceding claims, wherein the volume ratio of the liquid perfluoropolyether to the liquid alkoxy-perfluoroalkane in the mixture is from 20:80 to 40:60, or alternatively from 80:20 to 60:40, or from 30:70 to 70:30, such as from 40:60 to 60:40, preferably from 45:55 to 55:45, most preferably 50:50.

12. Use of the liquid heat transfer mixture according to any of the preceding claims for cooling or heating an electrical component, preferably for cooling or heating an electrical component in an electric vehicle, more preferably for heating or cooling a battery powering an electric vehicle such as an electric car.

13. The use according to claim 12, wherein the use comprises bringing the liquid heat transfer mixture into contact with the electrical component, preferably by bringing the liquid heat transfer mixture into contact with electrically conducting parts of the electrical component.

14. The use according to claim 13, wherein the use comprises cooling or heating a battery powering an electric vehicle such as a car, wherein the battery comprises a plurality of battery cells and the liquid heat transfer mixture is brought into contact with the terminals of at least a majority of the battery cells.

15. The use according to any of the claims 12-14, wherein the electric vehicle is an electrically powered car or a hybrid car having an internal combustion engine and an electrical engine both arranged for powering the car, and wherein the car preferably has a total engine power for powering the car of at least 500 kW.

## Patentansprüche

1. Flüssiges Wärmeübertragungsgemisch, umfassend ein Gemisch aus einem flüssigen Perfluorpolyether und einem flüssigen Alkoxy-Perfluoralkan, wobei das Volumenverhältnis des flüssigen Perfluorpolyethers zu dem flüssigen Alkoxy-Perfluoralkan zwischen 20:80 und 80:20 beträgt.

2. Flüssiges Wärmeübertragungsgemisch nach Anspruch 1, wobei der Perfluorpolyether einen Siedepunkt aufweist, welcher mindestens 55 °C, bevorzugt mindestens 70 °C, mehr bevorzugt mindestens 100 °C beträgt, und dessen Siedepunkt höher ist als der Siedepunkt des flüssigen Alkoxy-Perfluoralkans.

3. Flüssiges Wärmeübertragungsgemisch nach einem der vorstehenden Ansprüche 1, wobei der flüssige Perfluorpolyether die allgemeine chemisches Formel CF₃-O-(CF₂(CF₃)-CF-O)ₙ-(CF₂-O)ₘ-CF₃, und bevorzugt ein durchschnittliches Molekulargewicht von mindestens 340 g/Mol, bevorzugt mindestens 530 g/Mol, mehr bevorzugt mindestens 580 g/Mol, beispielsweise mindestens 610, 760, 870 oder 1020 g/Mol aufweist.

4. Flüssiges Wärmeübertragungsgemisch nach einem der vorstehenden Ansprüche, wobei der flüssige Perfluorpolyether ein Perfluorpolyether ist, welcher unter dem Warenzeichen Galden erhältlich ist.

5. Flüssiges Wärmeübertragungsgemisch nach einem der vorstehenden Ansprüche, wobei das flüssige Alkoxy-Perfluoralkan eine Methoxy- oder Ethoxygruppe umfasst, welche an ein perfluoriertes Propan, Butan, Pentan oder Heptan gebunden ist.

6. Flüssiges Wärmeübertragungsgemisch nach einem der vorstehenden Ansprüche, wobei das flüssige Alkoxy-Perfluoralkan ausgewählt ist aus der Gruppe bestehend aus Methoxyheptafluorpropan, Methoxy-nonafluorbutan, Ethoxy-nonafluorbutan 3-Methoxyperfluor(2-methylpentan), 2-(trifluormethyl)-3-ethoxydodecafluorhexan, 1,1,1,2,3,3-Hexafluor-4-(1,1,2,3,3,3-hexafluorpropoxy)-Pentan und 2,3,3,4,4-pentafluor-5-methoxy-2,5-bis[1,2,2,2-tetrafluor-1-(trifluormethyl)ethyl]tetrahydrofuran.

7. Flüssiges Wärmeübertragungsgemisch nach einem der vorstehenden Ansprüche, wobei das flüssige Alkoxy-Perfluoralkan eine spezifische Wärme von mindestens 1040, bevorzugt mindestens 1140 oder mindestens 1183, mehr bevorzugt mindestens 1220, beispielsweise mindestens 1300 J/kg-K, aufweist.

8. Flüssiges Wärmeübertragungsgemisch nach einem der vorstehenden Ansprüche, wobei das flüssige Alkoxy-Perfluoralkan eine spezifische Wärme aufweist, welche mindestens 140 J/kg-K größer, und bevorzugt nicht mehr als 356 J/kg-K größer ist als die spezifische Wärme des Perfluorpolyethers.

9. Flüssiges Wärmeübertragungsgemisch nach einem der vorstehenden Ansprüche, wobei das flüssige Alkoxy-Perfluoralkan ein flüssiges Alkoxy-Perfluoralkan ist, welches unter dem Warenzeichen Novec erhältlich ist.

10. Flüssiges Wärmeübertragungsgemisch nach einem der vorstehenden Ansprüche, wobei das flüssige Batteriekühlmittelgemisch aus einem Gemisch aus dem flüssigen Perfluorpolyether und dem flüssigen Alkoxy-Perfluoralkan besteht.

11. Flüssiges Wärmeübertragungsgemisch nach einem der vorstehenden Ansprüche, wobei das Volumenverhältnis des flüssigen Perfluorpolyethers zu dem flüssigen Alkoxy-Perfluoralkan in dem Gemisch zwischen 20:80 und 40:60, oder alternativ zwischen 80:20 und 60:40, oder zwischen 30:70 und 70:30, beispielsweise zwischen 40:60 und 60:40, bevorzugt zwischen 45:55 und 55:45, am meisten bevorzugt 50:50 beträgt.

12. Verwendung des flüssigen Wärmeübertragungsgemischs nach einem der vorstehenden Ansprüche zum Kühlen oder Beheizen einer elektrischen Komponente, bevorzugt zum Kühlen oder Beheizen einer elektrischen Komponente in einem elektrischen Fahrzeug, mehr bevorzugt zum Beheizen oder Kühlen einer Batterie, welche ein elektrisches Fahrzeug, beispielsweise ein elektrisches Auto, antreibt.

13. Verwendung nach Anspruch 12, wobei die Verwendung ein Inkontaktbringen des Wärmeübertragungsgemischs mit der elektrischen Komponente umfasst, bevorzugt indem das Wärmeübertragungsgemisch mit elektrisch leitenden Teilen der elektrischen Komponente in Kontakt gebracht wird.

14. Verwendung nach Anspruch 13, wobei die Verwendung ein Kühlen oder Beheizen einer Batterie umfasst, welche ein elektrisches Fahrzeug, beispielsweise ein elektrisches Auto, antreibt, wobei die Batterie eine Vielzahl von Batteriezellen umfasst und das flüssige Wärmeübertragungsgemisch mit den Enden von mindestens einer Mehrheit der Batteriezellen in Kontakt gebracht wird.

15. Verwendung nach einem der Ansprüche 12-14, wobei das elektrische Fahrzeug ein elektrisch angetriebenes Auto oder ein Hybridauto ist, welches einen Verbrennungsmotor und einen elektrischen Motor aufweist, welche beide zum Antreiben des Autos angeordnet sind, und wobei das Auto bevorzugt eine Gesamtmotorleistung zum Antreiben des Autos von mindestens 500 kW aufweist.

## Revendications

1. Mélange de transfert de chaleur liquide comprenant un mélange d'un perfluoropolyéther liquide et d'un alcoxy-perfluoroalcane liquide, dans lequel le rapport en volume du perfluoropolyéther liquide à l'alcoxy-perfluoroalcane liquide est de 20:80 à 80:20.

2. Mélange de transfert de chaleur liquide selon la revendication 1, dans lequel le perfluoropolyéther a un point d'ébullition qui est d'au moins 55 °C, de préférence au moins 70 °C, plus préférablement au moins 100 °C, et ledit point d'ébullition est supérieur au point d'ébullition de l'alcoxy-perfluoroalcane liquide.

3. Mélange de transfert de chaleur liquide selon l'une quelconque des revendications précédentes 1, dans lequel le perfluoropolyéther liquide a la formule chimique générale de CF₃-O-(CF₂(CF₃)-CF-O)ₙ-(CF₂-O)ₘ-CF₃, et de préférence un poids moléculaire moyen d'au moins 340 g/mole, de préférence au moins 530 g/mole, plus préférablement au moins 580 g/mole tel qu'au moins 610, 760, 870 ou 1020 g/mole.

4. Mélange de transfert de chaleur liquide selon l'une quelconque des revendications précédentes, dans lequel le perfluoropolyéther liquide est un perfluoropolyéther disponible sous le nom de marque Galden.

5. Mélange de transfert de chaleur liquide selon l'une quelconque des revendications précédentes, dans lequel l'alcoxy-perfluoroalcane liquide comprend un groupe méthoxy ou éthoxy lié à un propane, butane, pentane ou heptane perfluoré.

6. Mélange de transfert de chaleur liquide selon l'une quelconque des revendications précédentes, dans lequel l'alcoxy-perfluoroalcane liquide est choisi dans le groupe constitué de méthoxy-heptafluoropropane, méthoxy-nonafluorobutane, éthoxy-nonafluorobutane 3-méthoxyperfluoro(2-méthylpentane), 2-(trifluorométhyl)-3-éthoxydodécafluorohexane, 1,1,1,2,3,3-hexafluoro-4-(1,1,2,3,3,3-hexafluoropropoxy)-pentane, et 2,3,3,4,4-pentafluoro-5-méthoxy-2,5-bis[1,2,2,2-tétrafluoro-1-(trifluorométhyl)éthyl]tétrahydrofurane.

7. Mélange de transfert de chaleur liquide selon l'une quelconque des revendications précédentes, dans lequel l'alcoxy-perfluoroalcane liquide a une chaleur spécifique d'au moins 1040, de préférence au moins 1140 ou au moins 1183, plus préférablement au moins 1220 tel qu'au moins 1300 J/kg-K.

8. Mélange de transfert de chaleur liquide selon l'une quelconque des revendications précédentes, dans lequel l'alcoxy-perfluoroalcane liquide a une chaleur spécifique qui est supérieure d'au moins 140 J/kg-K, et de préférence supérieure de pas plus de 356 J/kg-K, à la chaleur spécifique du perfluoropolyéther.

9. Mélange de transfert de chaleur liquide selon l'une quelconque des revendications précédentes, dans lequel l'alcoxy-perfluoroalcane liquide est un alcoxy-perfluoroalcane liquide disponible sous le nom de marque Novec.

10. Mélange de transfert de chaleur liquide selon l'une quelconque des revendications précédentes, dans lequel le mélange de fluide caloporteur liquide de batterie est constitué d'un mélange du perfluoropolyéther liquide et de l'alcoxy-perfluoroalcane liquide.

11. Mélange de transfert de chaleur liquide selon l'une quelconque des revendications précédentes, dans lequel le rapport en volume du perfluoropolyéther liquide à l'alcoxy-perfluoroalcane liquide dans le mélange est de 20:80 à 40:60, ou en variante de 80:20 à 60:40, ou de 30:70 à 70:30, tel que de 40:60 à 60:40, de préférence de 45:55 à 55:45, de manière préférée entre toutes 50:50.

12. Utilisation du mélange de transfert de chaleur liquide selon l'une quelconque des revendications précédentes pour refroidir ou chauffer un composant électrique, de préférence pour refroidir ou chauffer un composant électrique dans un véhicule électrique, plus préférablement pour refroidir ou chauffer une batterie alimentant un véhicule électrique tel qu'une voiture électrique.

13. Utilisation selon la revendication 12, où l'utilisation comprend la mise en contact du mélange de transfert de chaleur liquide avec le composant électrique, de préférence par mise en contact du mélange de transfert de chaleur liquide avec des parties électriquement conductrices du composant électrique.

14. Utilisation selon la revendication 13, où l'utilisation comprend le refroidissement ou le chauffage d'une batterie alimentant un véhicule électrique tel qu'une voiture, dans laquelle la batterie comprend une pluralité de cellules de batterie et le mélange de transfert de chaleur liquide est mis en contact avec les bornes d'au moins une majorité des cellules de batterie.

15. Utilisation selon l'une quelconque des revendications 12 à 14, dans laquelle le véhicule électrique est une voiture alimentée électriquement ou une voiture hybride comportant un moteur à combustion interne et un moteur électrique tous deux agencés pour alimenter la voiture, et dans laquelle la voiture a de préférence une puissance de moteur totale pour alimenter la voiture d'au moins 500 kW.
